# EUROPEAN PATENT SPECIFICATION

(11) **EP 1 350 256 B1**
(45) Date of publication and mention of the grant of the patent: **28.09.2005**
(21) Application number: 01999947.3
(22) Date of filing: 05.12.2001
(51) Int. Cl.: H01F 1/147, H02K 1/02

(54) **USE OF A Cr-Al STEEL IN LAMINATED MAGNET CORES**
VERWENDUNG EINES Cr-Al-STAHLS IN LAMINIERTEN MAGNETKERNEN
UTILISATION D'UN ACIER A BASE DE Cr-Al DANS DES NOYAUX D'AIMANT LAMINES

(30) Priority: 05.12.2000 SE 0004489
(43) Date of publication of application: 08.10.2003
(73) Proprietor: Surahammars Bruks Aktiebolag, 735 23 Surahammar (SE)
(72) Inventor: WEST, Roger, S-730 60 Ramnäs (SE)
(74) Representative: Johansson, Lars E.
(86) International application number: PCT/SE2001/002675
(87) International publication number: WO 2002/047094

(56) References cited:
- EP-A1- 0 408 281
- EP-A2- 0 601 854
- DE-A1- 19 934 989
- DATABASE WPI Week 198302, Derwent Publications Ltd., London, GB; AN 1983-03045K, XP002907691 & JP 57 192 246 A (SHOWA DENKO KK) 26 November 1982

## Description

### TECHNICAL FIELD

The invention relates to a new use of a ferritic stainless steel in laminated cores for electrical machines and apparatuses, which cores are to conduct electromagnetically induced magnetic alternating fluxes under high frequency. The ferritic stainless steel which is to be used and laminated in the cores is in the form of a thin plate. Most typical applications of the invention in electric apparatuses having laminated cores, are transformers, rotating electrical machines and ballasts.

### PRIOR ART

A magnetic core used in applications with alternating magnetic fields is always constructed in laminated form by stacking of cut or punched thin sheet, or in some cases, wound strip. Typical thicknesses are 0.50 mm and 0.35 mm, but even thinner gauges are sometimes used. The reason for laminating is to reduce the eddy currents induced in the core and to reduce the associated losses. To accomplish this purpose, the development has been towards constantly thinner sheets. In order to reduce the eddy current losses, it is common practice to increase the specific electrical resistance of the sheet by the iron being alloyed mainly by silicon. The use of silicon however results in a decrease in the ductility of the alloy, which limits the amount of silicon that may be added, whilst retaining the ability for the sheet material to be rolled to the desired thickness. In order to increase the ductility of the sheet material, it is known from EP 0 915 179-A2 to alloy the material by chromium, which makes it possible to considerably increase the amount of added silicon. Chromium both improves the ductility and, just as silicon, improves the resistivity. In the indicated publication it is thus reported that a steel containing 18.3 % Cr and 6.4 % Si exhibited a specific resistivity of 133 µΩ cm and that the material exhibited a ductility sufficient at least to enable hot rolling. This material also contains a small amount of aluminium. It is further known from EP 0 408 281-B1 that a stainless steel with up to as much as 35 % Cr and also containing 0.03-1.89 % Al can be used for electromagnetic components, which material besides good electromagnetic properties also has good corrosion resistance and can be cold worked, i.e. has good ductility. EP 0 601 854-A2 reports properties of a number of electromagnetic stainless steels, one of them being a steel which contains 18.0 % Cr and 2.9 % Al and another being a steel which contains 10.5 % Cr and 6.8 % Al. The former has an electric resistivity of 119 µΩ cm and the latter an electric resistivity of 115 µΩ cm. JP 57-192246 presents a steel which contains 25 Cr and 4 Al and which has an electric resistivity of 125 µΩ cm. DE 199 34 989 discloses thin plates of steel comprising Fe, Cr, Al and Si intended for use in industrial products comprising a magnetic circuit such as the rotor of a motor, to conduct electromagnetically induced magnetic alternating fluxes. No frequencies of the alternating magnetic field are however specified. DE 199 34 989 shows examples of a steel containing 17.70 Cr and 4.68 Al and having an electrical resistivity of 124 µΩ cm and a steel containing 17.70 Cr and 5.20 Al and having an electrical resistivity of 131 µΩ cm.

### BRIEF ACCOUNT OF THE INVENTION

A material adapted to be used as a magnetic core in electrical apparatuses and machines should generally satisfy the following criteria:
- the material should exhibit low specific magnetic resistance in order to allow a high magnetic flux density, i.e. a high saturation for the magnetic flux density, normally implying a high iron content in the material,
- the material should exhibit a high electrical resistivity to suppress the formation of eddy currents in the core. An electrical resistivity above 120 µΩ cm, preferably at least 130 µΩ cm, and even more preferred at least 138 µΩ cm, is desirable for the material to be used at a magnetic alternating field having a frequency of 400 Hz or higher,
- the material should exhibit a ductility good enough to enable rolling of the material to strips or sheets having a thickness down to at least 0.05 mm and preferably down to 0.02 mm,
- the material should give a low power loss also at very high frequencies.

Moreover, it is an advantage if the material has a good corrosion resistance. It is also a requirement that the manufacturing costs are not unacceptably high.

According to the present invention, the above requirements can be achieved by the use of a steel which not necessarily contains any considerable amount of Si (Si may be allowed from contamination content and up to max 0.7 Si according to a widest aspect of the invention), but which contains 19-30 Cr and 4.5-12 Al. Contents mentioned throughout this text are all in weight-%.

Additional characteristics and aspects of the invention are clear from the subsequent, dependent claims.

### BRIEF DESCRIPTION OF THE DRAWINGS

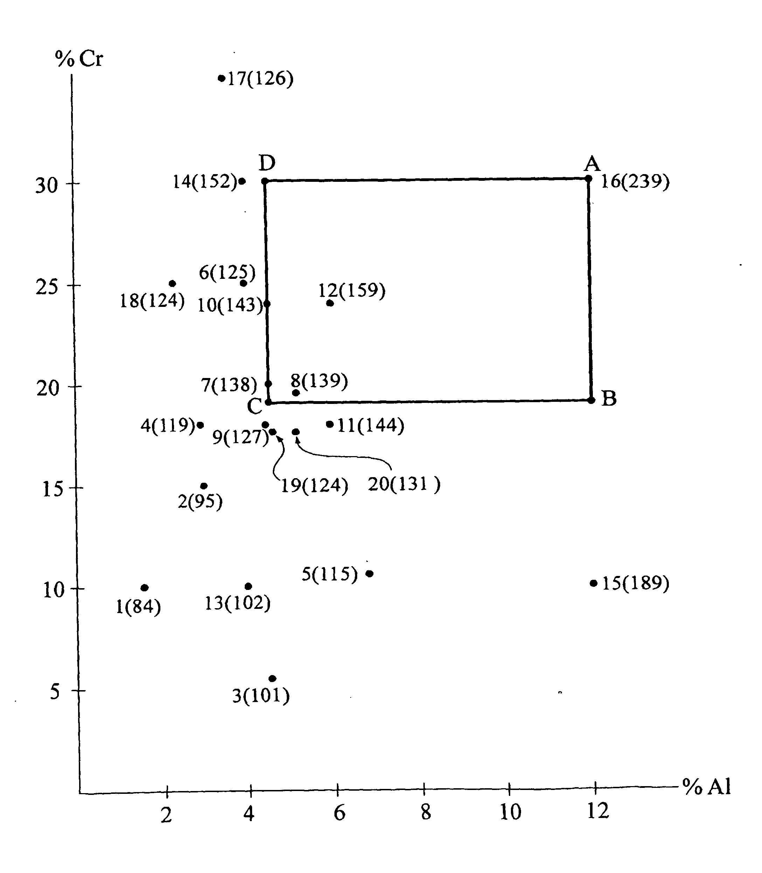

In the drawing figure, there is shown a surface in a coordinate system in the form of a %Al/%Cr diagram. The frame of this surface and the area within the frame defines steels having Al and Cr contents that in said steels yield a resistivity of at least 138 µΩ cm.

### STUDIED STEELS

The chemical compositions of the studied steels are presented in the table below. Of these steels, no. 1-6 and 17-20 are reference steels according to prior art. The electric resistivity is also presented in Table 1. According to prior art, a maximum resistivity of 131 µΩ cm is achieved for steel no. 20, which contains Al 5.20 % Al and 17.70 % Cr. Steel no. 7 has a composition according to the invention. The composition presented in Table 1 is the nominal composition. The carbon content was max about 0.01% after decarburisation. The properties of the steel have been studied and these studies are presented in Example 1 and 2 below. Steels no. 8-16 are represented in the table by the nominal compositions of the steels and the calculated electric resistivities. These steels too have a carbon content after decarburisation less than 0.02% or max 0.01%. Steels 7, 8, 10, 12 and 16 are steels according to the invention as claimed. Steels 9, 11 and 13-15 are steels for comparative testing.

**Table 1**

| Chemical composition in weight-% and electric resistivity for studied steels | | | | | | | |
|---|---|---|---|---|---|---|---|
| Steel no. | C | Si | Cr | Al | Other | Rest | Electric resistivity µΩ cm |
| 1 (ref) | 0.007 | 1.1 | 10.0 | 1.5 | 0.15 Bi | Fe +contam. | 84 |
| 2 (ref) | 0.011 | 0.04 | 15.0 | 3.0 | 0.07 Bi | Fe +contam. | 95 |
| 3 (ref) | 0.005 | 0.65 | 5.5 | 4.5 | 0.05 Bi | Fe +contam. | 101 |
| 4 (ref) | 0.005 | 1.1 | 18.0 | 2.9 | 0.10 Bi | Fe +contam. | 119 |
| 5 (ref) | 0.013 | 0.12 | 10.5 | 6.8 | 0.31 Bi | Fe +contam. | 115 |
| 6 (ref) | n.a. | n.a. | 25 | 4 | - | Fe +contam. | 125 |
| 7 (inv) | ≤ 0.02 | 0.22 | 20 | 4.5 | 0.02 REM | Fe +contam. | 138 |
| 8 (inv) | ≤ 0.02 | ca 0.2 | 19.5 | 5.2 | - | Fe +contam. | 139 |
| 9 (com) ≤ | 0.02 | ca 0.2 | 18.0 | 4.5 | - | Fe +contam. | 127 |
| 10 (inv) | ≤ 0.02 | ca 0.2 | 24.0 | 4.5 | - | Fe +contam. | 143 |
| 11 (com) | ≤ 0.02 | ca 0.2 | 18.0 | 6.0 | - | Fe +contam. | 144 |
| 12 (inv) | ≤ 0.02 | ca 0.2 | 24.0 | 6.0 | - | Fe +contam. | 159 |
| 13 (com) | ≤ 0.02 | ca 0.2 | 10.0 | 4.0 | - | Fe +contam. | 102 |
| 14 (com) | ≤ 0.02 | ca 0.2 | 30.0 | 4.0 | - | Fe +contam. | 152 |
| 15 (com) | ≤ 0.02 | ca 0.2 | 10.0 | 12.0 | - | Fe +contam. | 189 |
| 16 (inv) | ≤ 0.02 | ca 0.2 | 30.0 | 12.0 | - | Fe +contam. | 239 |
| 17 (ref) | 0.006 | 0.05 | 35.00 | 3.51 | Mn, Cu, Pb | Fe +contam. | 126 |
| 18(ref) | 0.028 | 0.15 | 25.00 | 2.30 | Mn, Cu, Mo, Zr | Fe +contam. | 124 |
| 19 (ref) | 0.51 | 0.19 | 17.70 | 4.68 | Mn, Ni, N | Fe +contam. | 124 |
| 20 (ref) | 0.51 | 0.19 | 17.70 | 5.20 | Mn, Ni, N | Fe +contam. | 131 |
| ref: Reference steel according to prior art | | | | | | | |
| com: Comparative steel | | | | | | | |
| inv: Steel according to the invention as claimed | | | | | | | |

### EXAMPLE 1

Steel no. 7 having the nominal composition according to Table 1 was rolled to a thickness of 0.05 mm. The resistivity was measured to 138 µΩ cm. The thin strip was annealed at 800°C for 20 min in an atmosphere of nitrogen with 3% hydrogen and a dew point of 40°C. The power loss for this material was measured to be 12.5 W/kg at 10 kHz, Bpk = 0.1 T. (Bpk = Peak Magnetic Flux Density. T = Tesla.)

### EXAMPLE 2

The same thin strip, thickness 0.05 mm, as in Example 1, having a resistivity of 138 µΩ cm was annealed in a decarburising atmosphere, whereby the carbon content was lowered to max about 0.01%. The measured power loss after annealing and decarburisation was in this case measured to be 11.5 W/kg at 10 kHz, Bpk = 0.1 T.

In the diagram of the figure, the position of the studied steels in the coordinate system is shown. The points for the different steels are identified by the numbers of the steels according to the table and the electric resistivity of the respective steel is shown within parenthesis.

The corner points A-D for the figure in the diagram have the following coordinates:

| | %Al/%Cr |
|---|---|
| A: | 12/30 |
| B: | 12/19 |
| C: | 4.5/19 |
| D: | 4.5/30 |

The steels according to the invention, having a resistivity above 138 µΩ cm, are positioned within the frame of the figure having said corner coordinates.

## Claims

1. Use, in laminated cores for electrical apparatuses and machines, which cores are to conduct electromagnetically induced magnetic alternating fluxes having a frequency above 50 Hz, of a thin plate of a ferritic stainless steel having a specific electric resistivity of at least 120 µΩ cm, which steel besides Fe contains in weight-%, 19-30 Cr, 4.5-12 Al and Si from traces and up to max 0.7 Si.

2. Use according to claim 1 in cores which are to conduct electromagnetically induced magnetic alternating fluxes above 400 Hz.

3. Use according to any one of claims 1-2 of a steel which contains 25 wt% Cr at the most.

4. Use according to any one of claims 1-3 of a steel which contains more than 5 wt% Al.

5. Use according to any one of claims 1-4 of a steel which contains 7 wt% Al at the most.

6. Use according to claim 5 of a steel which contains 24 wt% Cr at the most and 6 wt% Al at the most.

7. Use according to any one of claims 1-6 of a steel which contains 22 wt% Cr at the most.

8. Use according to claim 7 of a steel which contains 5.2-5.8 wt% Al.

9. Use according to any one of claims 1-4 and 7 of a steel which contains 21 wt% Cr at the most and 7-12 wt% Al.

10. Use according to claim 9 of a steel which contains 19-21 wt% Cr and 8-12 wt% Al.

11. Use according to any one of claims 1-10 of a steel which besides Fe, Cr, Al and optionally Si has a total content of max 2 wt% other elements.

12. Use according to claim 11, in which said other elements with a total content of max 2 wt% comprise up to max 0.1 C and a total content of max 0.5 of Ce + La + Y + Hf + Sc + and optionally other rare earth metals.

## Patentansprüche

1. Verwendung einer dünnen Platte aus ferritischem rostfreiem Stahl mit einem spezifischen elektrischen Widerstand von mindestens 120 µΩ cm, wobei der Stahl neben Fe in Gew.-% 19-30 Cr, 4,5-12 Al und Si in Spuren und bis zu maximal 0,7 Si enthält, in laminierten Kernen für elektrische Vorrichtungen und Maschinen, wobei die Kerne elektromagnetisch induzierte magnetische Wechselflüsse mit einer Frequenz über 50 Hz leiten sollen.

2. Verwendung nach Anspruch 1 in Kernen, die elektrisch induzierte magnetische Wechselflüsse über 400 Hz leiten sollen.

3. Verwendung nach einem der Ansprüche 1-2 eines Stahls, der höchstens 25 Gew.-% Cr enthält.

4. Verwendung nach einem der Ansprüche 1-3 eines Stahls, der mehr als 5 Gew.-% Al enthält.

5. Verwendung nach einem der Ansprüche 1-4 eines Stahls, der höchstens 7 Gew.-% A1 enthält.

6. Verwendung nach Anspruch 5 eines Stahls, der höchstens 24 Gew.-% Cr und höchstens 6 Gew.-% Al enthält.

7. Verwendung nach einem der Ansprüche 1-6 eines Stahls, der höchstens 22 Gew.-% Cr enthält.

8. Verwendung nach Anspruch 7 eines Stahls, der 5,2-5,8 Gew.-% Al enthält.

9. Verwendung nach einem der Ansprüche 1-4 und 7 eines Stahls, der höchstens 21 Gew.-% Cr und 7-12 Gew.-% Al enthält.

10. Verwendung nach Anspruch 9 eines Stahls, der 19-21 Gew.-% Cr und 8-12 Gew.-% Al enthält.

11. Verwendung nach einem der Ansprüche 1-10 eines Stahls, der neben Fe, Cr, Al und wahlweise Si insgesamt höchstens 2 Gew.-% andere Elemente enthält.

12. Verwendung nach Anspruch 11 wobei die anderen Elemente mit insgesamt höchstens 2 Gew.-% bis zu höchstens 0,1 C und insgesamt höchstens 0,5 Gew.-% Ce + La + Y + Hf + Sc und wahlweise andere Seltenerdmetalle enthalten.

## Revendications

1. Utilisation, dans des noyaux stratifiés pour des appareils et des machines électriques, lesdits noyaux servant à conduire des flux alternatifs magnétiques induits de façon électromagnétique, ayant une fréquence supérieure à 50 Hz, d'une mince plaque d'acier inoxydable ferritique ayant une résistivité électrique spécifique d'au moins 120 µΩ cm, ledit acier contenant, en plus de Fe, en % en poids, 19-30 de Cr, 4,5-12 de Al et du Si de l'état de traces jusqu'à 0,7 de Si au plus.

2. Utilisation selon la revendication 1 dans des noyaux qui servent à la conduction de flux alternatifs magnétiques induits de façon électromagnétique au-delà de 400 Hz.

3. Utilisation selon l'une quelconque des revendications 1-2 d'un acier qui contient au plus 25 % en poids de Cr.

4. Utilisation selon l'une quelconque des revendications 1 à 3 d'un acier qui contient plus de 5 % en poids de Al.

5. Utilisation selon l'une quelconque des revendications 1 à 4 d'un acier qui contient au plus 7 % en poids de Al.

6. Utilisation selon la revendication 5 d'un acier qui contient au plus 24 % en poids de Cr et au plus 6 % en poids de Al.

7. Utilisation selon l'une quelconque des revendications 1 à 6 d'un acier qui contient au plus 22 % en poids de Cr.

8. Utilisation selon la revendication 7 d'un acier qui contient de 5,2 à 5,8 % en poids de Al.

9. Utilisation selon l'une quelconque des revendications 1 à 4 et 7 d'un acier qui contient au plus 21 % en poids de Cr et 7 à 12 % en poids de Al.

10. Utilisation selon la revendication 9 d'un acier qui contient de 19 à 21 % en poids et de 8 à 12 % en poids de Al.

11. Utilisation selon l'une quelconque des revendications 1 à 10 d'un acier qui, en plus de Fe, Cr, Al et éventuellement Si, a une teneur totale en autres éléments de 2 % en poids au plus.

12. Utilisation selon la revendication 11, dans laquelle lesdits autres éléments avec une teneur totale de 2 % en poids au plus comprennent jusqu'à 0,1 de C au plus et une teneur totale de 0,5 au plus de Ce + La + Y + Hf + Sc + éventuellement d'autres métaux des terres rares.
